# EUROPÄISCHE PATENTANMELDUNG

(11) **EP 4 016 681 A1**
(43) Veröffentlichungstag der Anmeldung: **22.06.2022**
(21) Anmeldenummer: 20214269.1
(22) Anmeldetag: 15.12.2020
(51) Int. Cl.: H01M 8/18

(54) **REBALANCING SYSTEM EINER FE/FE REDOX FLOW BATTERIE**

(71) Anmelder: VoltStorage GmbH, 81379 München (DE)
(72) Erfinder: Peither, Michael, 81675 München (DE); Dr. Buddhinie, Jayathilake, 81379 München (DE); Trogisch, Niklas, 81379 München (DE)
(74) Vertreter: Sommer, Andrea

(57) **Zusammenfassung**

Die Erfindung betrifft eine Eisen-Eisen-Redox-Fluss-Batterie, umfassend eine erste Redox-Fluss-Zelle 604 umfassend, einen ersten Anodenraum 628 mit einer ersten Anode 605, einem Anolyt-Tank 600 und einer Anolyt-Pumpe 602, die so miteinander verbunden sind, dass ein Anolyt 802 zwischen dem Anolyt-Tank 600 und dem Anodenraum 628 umgewälzt werden kann, einen ersten Kathodenraum 629 mit einer ersten Kathode 606, einem Katholyt-Tank 601 und einer ersten Katholyt-Pumpe 603, die so miteinander verbunden sind, dass ein Katholyt 803 zwischen dem Katholyt-Tank 601 und dem ersten Kathodenraum 629 umgewälzt werden kann, und einen ersten Separator 607, zwischen dem ersten Anodenraum 628 und dem ersten Kathodenraum 629, wobei die Eisen-Eisen-Redox-Fluss-Batterie eine zweite Redox-Fluss-Zelle 611 aufweist, umfassend einen zweiten Anodenraum 630 mit einer zweiten Anode 612, einem Reduktionslösungstank 608 und einer Reduktionslösungs-Pumpe 610, die so miteinander verbunden sind, dass eine Reduktionslösung zwischen dem Reduktionslösungstank 608 und dem zweiten Anodenraum 630 umgewälzt werden kann, einen zweiten Kathodenraum 631 mit einer zweiten Kathode 613 und einer zweiten Katholyt-Pumpe 609, die so miteinander verbunden sind, dass der Katholyt 803 zwischen dem zweiten Kathodenraum 631 und dem Katholyt-Tank 601 umgewälzt werden kann, einen zweiten Separator 614 zwischen dem zweiten Anodenraum 630 und dem zweiten Kathodenraum 631. Des Weiteren betrifft die Erfindung ein Verfahren zum Regenerieren des Katholyten 803 einer ersten Redox-Fluss-Zelle 604 einer Eisen-Eisen-Redox-Fluss-Batterie.

## Beschreibung

Redox Flow Batterien sind seit den 1980er Jahren im Einsatz und eignen sich sehr gut für die Speicherung von elektrischer Energie in stationären Anwendungen. Redox-Flow-Batterien sind bereits in verschiedenen Ausführungen bekannt. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch eine sogenannte elektrochemische Zelle gepumpt.

Diese Zelle wird dabei aus zwei Halbzellen gebildet, die über einen Separator, vorzugsweise einem mikroporösem Separator, voneinander getrennt sind und jeweils einen Zellinnenraum, einem flüssigen Elektrolyten und eine Elektrode umfassen. Der Separator ist semipermeabel und hat die Aufgabe, Kathode und Anode einer elektrochemischen Zelle räumlich und elektrisch voneinander zu trennen. Dazu muss der Separator für bestimmte Ionen durchlässig sein, welche die Umwandlung der gespeicherten chemischen Energie in elektrische Energie bewirken. Separatoren können beispielsweise aus mikroporösen Kunststoffen (oder präparierten Silica) gebildet werden. An beiden Elektroden der Zelle, also an der Anode und an der Kathode, laufen Redox-Reaktionen ab, wobei von den Elektrolyten an einer Elektrode (Kathode) Elektronen freigesetzt und an der anderen Elektrode Elektronen aufgenommen (Anode) werden. Die metallischen und/oder nichtmetallischen Ionen der Elektrolyte bilden Redox-Paare und erzeugen folglich ein Redox-Potential. Als Redox-Paare kommen bisher beispielsweise Eisen-Chrom, Polysulfid-Bromid, Vanadium oder andere Schwermetalle in Anwendungen vor. Diese oder auch andere Redox-Paare können grundsätzlich in wässriger oder nicht wässriger Lösung vorliegen. In der vorliegenden Erfindung wird das Eisen/Eisen Redox Paar genutzt (Fe⁰/Fe²⁺ in der negativen Halbzelle und Fe²⁺/Fe³⁺ in der positiven Halbzelle), die in Hruska, L. W.; Savinell, R. F., Investigation of Factors Affecting Performance of the Iron-Redox Battery. Journal of the Electrochemical Society 1981, 128 ,18; zuerst experimentell demonstriert wurde. Eine solche Batterie wurde ebenfalls in der Patentliteratur, beispielsweise in US2014/0272493 A1 oder US 10,230,125 B2, erwähnt.

Die Elektroden einer Zelle, zwischen denen sich infolge der Redoxpotentiale eine Potentialdifferenz ausbildet, sind außerhalb der Zelle, z. B. über einen elektrischen Verbraucher, elektrisch miteinander verbunden. Während die Elektronen außerhalb der Zelle von einer Halbzelle zur anderen gelangen, treten Ionen der Elektrolyte durch den Separator direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Mehrere Zellen können zur Erhöhung der Leistung in Serie zusammengeschaltet und auch entsprechend zu einem sogenannten Zell-Stack gestapelt werden. Die Erhöhung der Kapazität wird durch die Vergrößerung des Elektrolytvolumens erreicht.

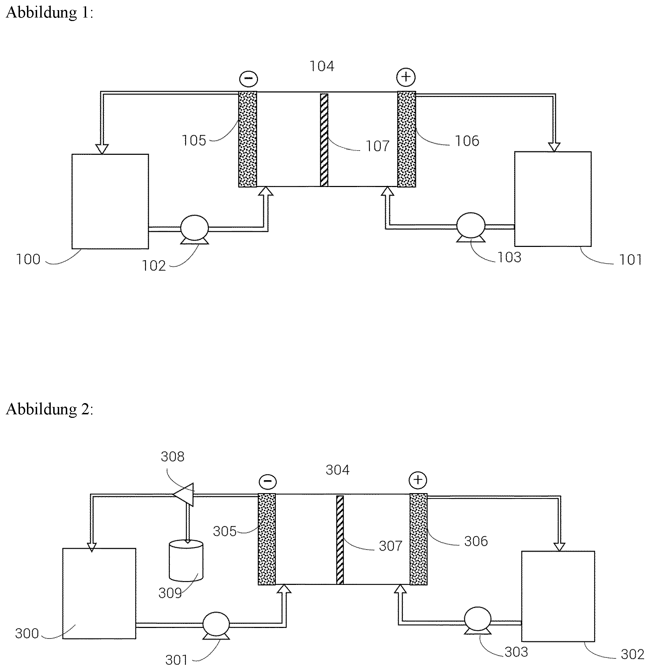

Ein schematischer Aufbau einer solchen Eisen/Eisen Redox Flow Batterie ist in Abbildung 1 sichtbar. Mittelpunkt ist die elektrochemische Zelle (104), bestehend aus einer negativen Elektrode (105), einer positiven Elektrode (106) und einem ionendurchlässigen Separator (104), der die beiden Halbzellen abtrennt. Die beiden Halbzeilen werden durch jeweils den negativen Elektrolyttank (100) und dem positiven Elektrolyttank (101) gespeist, wobei die Elektrolytflüssigkeit durch die beiden Pumpen (102 und 103) umgewälzt werden.

Im Detail läuft in diesem System folgende Redox-Reaktion an den Elektroden (105 und 106) bei der Ladung der Batterie ab:

| | | |
|---|---|---|
| Negative Elektrode: | *FeCl₂* + *2e⁻* → Fe + *Cl⁻* | *E*₀ = -0.44 V (1) |

| | | | |
|---|---|---|---|
| Positive Elektrode: | *2FeCl₂* + *2Cl⁻* → *2FeCl*₃ + *2e⁻* | *E*₀ = +0.71 *V* | (2) |

Entsprechend umgekehrt laufen die Reaktionen bei Entladung ab:

| | | |
|---|---|---|
| Negative Elektrode: | *Fe* + *Cl⁻* → *FeCl₂* + *2e⁻* | *E*₀ = -0.44 V (3) |

| | | | |
|---|---|---|---|
| Positive Elektrode: | *2FeCl*₃ + *2e⁻* → *2FeCl*₂ + *2Cl*⁻ | *E*₀ = +0.71 *V* | (4) |

Die Zelle bildet damit eine Nominalspannung von *Uₙₒₘ* = 1.25 V aus. Als Ladungsträger-Ion (Anion) wird das Chlorid-Ion *Cl*⁻ genutzt, daher muss der Separator 104 fähig sein, Anionen von einer zur anderen Zellhälfte auszutauschen.

Außerdem gilt es zu beachten, dass auf der negativen Elektrode das Eisen als elementares Eisen ohne Bindung auftritt. Dies setzt sich in dieser sogenannten "Plating" Reaktion auf der Elektrodenoberfläche als Feststoff ab, wohingegen sämtliche anderen vorkommenden Oxidationszustände des Eisens ein einer Chlorid-Verbindung auftreten und in der Flüssigkeit gelöst sind. Es ist dabei zweckmäßig, dass diese Flüssigkeiten auf Wasserbasis präpariert sind. Um die elektrische als auch die ionische Leitfähigkeit der Lösung zu erhöhen, wird ebenfalls ein sogenannter "supporting electrolyte" eingesetzt. Dieser besteht meist aus Kaliumchlorid (*KCl*), Ammoniumchlorid (*NH*₄*Cl*), Natriumchlorid (*NaCl*)*,* weiteren Chlorid-Verbindungen und/oder einer Kombination aus den vorher genannten Verbindungen.

Da der Elektrolyt auf Wasser basiert und ein sehr großer Masseanteil auch reines Wasser ist, ergibt sich an der negativen Elektrode die Problematik der Wasserzersetzung oder Wasserstoffabspaltung, da hier das Potential mit - 0.44 V niedriger liegt, als das Potential der Wasserstoff-Redox Reaktion von *E*₀ = 0 *V.* Da der Elektrolyt durch Zugabe von *FeCl*₂ als saures Medium vorliegt (*pH* = 0 - 2, konzentrationsabhängig), entstehen in der Lösung Oxonium (*H*₃*O*⁺) Moleküle. Dies ruft bei einem Potential an der Elektrode von < 0 V eine parasitäre Wasserstoffgas-Entwicklungsreaktion ("Hydrogen Evolution Reaction", im Folgenden als *HER* abgekürzt) an der negativen Elektrode und damit im negativen Elektrolyten hervor (Gleichung 5):

2*H*₃*O*⁺ + 2*e*⁻ → *H*₂ + 2*H*₂*O E*₀ = 0 *V* (5)

Dabei entweicht der Wasserstoff als *H*₂-Gas oder geht als *H*⁺-Ion mit dem elementaren Eisen eine weitere Verbindung ein, die wiederum *H*₂-Gas produziert und gleichzeitig das Eisen auf die nächsthöhere stabile Oxidationsstufe oxidiert:

*Fe*⁰ + 2*H*⁺ →*Fe*²⁺ + *H*₂ (6)

Beide Reaktionen sind ungewünschte parasitäre Effekte, die die Lade-/Entlade-Effizienz des Gesamtsystems verschlechtern und dabei zur selben Zeit die negative Elektrode korrodieren (Gleichung 6) und zu einer Verschiebung des Gleichgewichts der Oxidationszustände in der negative gegenüber der positiven Halbzelle (und des gesamten Elektrolyten) führen. Das wiederum schlägt sich in einer Verringerung der Batteriekapazität mit jedem Ladezyklus nieder. Außerdem wird der pH-Wert des Elektrolyten auf der negativen Zellseite immer weiter erhöht (da die *H*⁺-Konzentration sinkt), was (ab einem gewissen Zeitpunkt zu einer Beschleunigung obig genannter Reaktion führt).

Der Effekt dieser HER ist Gegenstand einiger wissenschaftlichen Abhandlungen und die Signifikanz dieser parasitären Reaktion wurde in der Literatur diskutiert (Jayathilake, B. S.; Plichta, E. J.; Hendrickson, M. A.; Narayanan, S. R., Improvements to the Coulombic Efficiency of the Iron Electrode for an All-Iron Redox-Flow Battery. Journal of The Electrochemical Society 2018, 165 (9), A1630-A1638.). Die HER kann unter Einsatz von Additiven im Elektrolyten, der Anpassung des pH-Werts und der Erhöhung der Arbeitstemperatur signifikant verringert werden (-90%), ist jedoch nicht auszuschließen. Daher müssen beide Elektrolyten nach einer gewissen Zeit wieder der Ursprungszusammensetzung angeglichen werden, was in diesem Fall bedeutet, den pH Wert (und damit die Wasserstoffkonzentration), den Wassergehalt, den Eisen(-chlorid)-Gehalt und die oxidationszustände des Eisens anzupassen. Die wird auch als "Rebalancing" bezeichnet und stellt die Ursprüngliche Kapazität und Leistungsfähigkeit der Batterie zu 100% wieder her.

Im Stand der Technik wurden hierfür bereits mehrere Lösungen gefunden, wie man mit das entstehende Wasserstoff wieder in die Elektrolytlösung einbringt. Dies ist unter anderem in Selverston, S.; Nagelli, E.; Wainright, J. S.; Savinell, R. F., All-Iron Hybrid Flow Batteries with In-Tank Rebalancing. Journal of The Electrochemical Society, 166 (10) A1725-A1731 (2019) und Selverston, S.; Savinell, R. F.; Wainright, J. S., In-tank hydrogen-ferric ion recombination. Journal of Power Sources, 324, 30 2016; beschrieben. Aber auch ESS Inc. aus den USA hat hierfür einen Lösungsvorschlag erarbeitet und patentiert (US 9,509,011 B2, US 10,230,125 B2). Alle diese Lösungen arbeiten mit dem Umgang von gasförmigem Wasserstoff, was sehr viele Sicherheits- und Kostenaspekte nach sich zieht. Beispielsweise muss das Wasserstoffgas in einer gewissen Konzentration und Druck vorliegen um es anhand einer Rekombinationszelle oder - Fläche, die mit edlen Metallen oder seltenen Erden als Katalysator beschichtet ist, wieder zu verarbeiten. All diese Komponenten addieren hohe Kosten auf ein sonst recht kostengünstiges Batteriesystem und lassen somit die Systemkosten stark steigen. Außerdem wurde das Speichern und Nutzen von reinem Wasserstoffgas unter Druck in geschlossenen Räumen als potentielle Sicherheitsproblematik identifiziert.

Die vorliegende Erfindung präsentiert eine neue Technik und System, um die beiden Elektrolyten einer Fe/Fe Redox Flow Batterie mit einfachen Mitteln und geringen Kosten in den Ausgangszustand zu versetzen, wobei dieses System während der normalen Operation der Batterie als auch periodisch unabhängig von der regulären Operation der Batterie eingesetzt werden kann.

Teil dieser Technik ist es, den positiven Elektrolyten zu rebalancen, in dem der pH-Wert, die Chloridionen-Konzentration und die Oxidationsstufe des Eisens wiederhergestellt wird. Im Normalfall sollte der pH-Wert im positiven Elektrolyten unverändert bleiben, da hier keine HER oder sonstige parasitäre Reaktionen stattfinden, die den pH-Wert beeinflussen können, bei einem Einsatz von porösen Separatoren in der Zelle anstatt Ionenaustauschmembrane, kann sich der pH-Wert durch Diffusion von *H*⁺ Ionen von der negativen in die positive Halbzelle erhöhen.

Wichtiger ist jedoch das Rebalancing des negativen Elektrolyten, bei dem ebenfalls der pH-Wert, die Chloridionen-Konzentration und die Oxidationsstufe des Eisens wiederhergestellt wird. Wie bereits oben beschrieben ist die Folge der HER eine starke Erhöhung des pH-Wertes im negativen Elektrolyten. Da sich dieser erhöhte pH-Wert ab *pH* = 3.5 negativ auf die HER und damit auf den Wirkungsgrad des Batteriesystems auswirkt, gilt es den pH-Wert kontinuierlich zu überwachen und entsprechend zu senken. Es ist dabei zweckmäßig, durch Zugabe von geringen Mengen konzentrierter Salzsäure (*HCl*) den pH-Wert zu senken. Die Wasserstoffanteile der Salzsäure gleichen den pH-Wert aus, dennoch ergibt sich durch eben diese Zugabe einen Überschuss an Chloridionen im negativen Elektrolyten. Da freie Chloridionen bei Ladung der Batterie als Ladungsträger von der negativen hin zur positiven Halbzelle durch den Separator diffundieren, wird die Chloridionen-Konzentration somit in dem negativen Elektrolyten automatisch angeglichen und muss deshalb nur im positiven Elektrolyten beeinflusst werden. Durch die HER wird nicht nur der pH-Wert der Lösung beeinträchtigt, sondern es wird auch ein gewisser Teil der eingebrachten elektrischen Energie auf diese parasitäre Reaktion verwendet, was ein Ungleichgewicht des Verhältnisses der Eisen-Oxidationsstufen im negativen gegenüber dem positiven Elektrolyten zur Folge hat. Im speziellen ist der Oxidationszustand im positiven Elektrolyten im Durchschnitt höher als der Sollwert, der aufgrund des Oxidationszustandes im negativen Elektrolyten zugrunde gelegt wird. Dies wird in folgendem Beispiel bei 50% Ladezustand (*SoC*) beschrieben:

### Sollwerte der Oxidationszustände:

| | | |
|---|---|---|
| Negativer Elektrolyt: | 50% *Fe*²⁺ + *50% Fe⁰* | Durchschnittswert: 1,0 |
| Positiver Elektrolyt: | 50% *Fe*²⁺ + 50% *Fe*³⁺ | Durchschnittswert: 2,5 |

### Istwerte der Oxidationszustände nach 100 Zyklen ohne Rebalancing:

| | | |
|---|---|---|
| Negativer Elektrolyt: | 50% *Fe*²⁺ + 50% *Fe*⁰ | Durchschnittswert: 1,0 |
| Positiver Elektrolyt: | 30% *Fe*²⁺ + 70% *Fe*³⁺ | Durchschnittswert: 2,7 |

In diesem Fall muss einer der Oxidationszustände wieder angeglichen werden. In der vorliegenden Erfindung wird dies durch eine Reduktion des positiven Elektrolyten in einer vom separaten "Rebalancing" (Redox Flow) Zelle durchgeführt. Der positive Elektrolyt der primären Fe/Fe Redox Flow Batterie dient in dieser separaten Zelle ebenfalls als positiver Elektrolyt, wohingegen der negative Elektrolyt (die Reduktionslösung) aus einem organischen elektroaktiven Material besteht. Die Zelle folgt ebenfalls dem klassischen Redox Flow Zell Design und besteht aus zwei Halbzellen mit (in diesem Fall) einer Anion-Austauschmembran als Abtrennung zwischen den zwei Zellhälften. Im Folgenden werden mehrere Reduktionslösungen getestete und geeignete Elektroaktive Materialien aufgezählt:

| **Elektroaktives Material** | **Struktur** |
|---|---|
| Glucose | C₆H₁₂O₆ |
| Askorbinsäure | C₆H₈O₆ |
| Ameisensäure | CH₂O₂ |
| Weinsäure | C₄H₆O₆ |
| Oxalsäure | C₂H₂O₄ |
| Fructose | C₆H₁₂O₆ |
| Galactose | C₆H₁₂O₆ |
| Hydroquinon | C₆H₆O₂ |
| Mercaptoessigsäure | C₂H₄O₂S |

Diese Reduktionslösungen bestehen aus mindestens einem der beispielhaft oben genannten elektroaktiven Materialien, die in Wasser und weiterhin in einem "supporting electrolyte" zur Erhöhung der Leitfähigkeit gelöst sind. Auch sind feste und/oder gasförmige Reduktionsmittel und -lösungen denkbar, jedoch schwerer praktisch umzusetzen.

Das Übergangs-Ion durch die Anionenaustauschmembran ist auch in diesem Fall wieder das Chlorid-Ion und diese "Rebalancing" Zelle besitzt nur den Betriebszustand der Entladung. Dadurch wird während der Operation dieser Zelle dem positiven Elektrolyten ebenfalls Chlorid-Ionen entzogen, zusätzlich zum Absenken der durchschnittlichen Oxidationsstufe der elektroaktiven Materialien im Elektrolyten. Der negative Elektrolyt der "Rebalancing" Zelle kann dabei mit der Zeit ausgetauscht und erneuert werden, auch sind alle Bestandteile dieses Elektrolyten frei zu geringen Kosten erhältlich. Die besten Ergebnisse wurden bei der Nutzung mit Askorbinsäure erreicht. Die chemischen Redoxreaktionen in der Rebalancing Zelle lauten wie folgt (wobei das Chloridion - ein Anion - hier lediglich als Ladungsausgleich durch die Membran diffundiert und nicht an der Gegenreaktion an der negativen Elektrode beteiligt ist):

| | |
|---|---|
| Positive Elektrode: | *FeCl*₃ + *e*⁻ → *FeCl₂* + *Cl*- |
| Negative Elektrode: | *Reduktionsmittel* → *Oxidationsmittel* + *e⁻* |

Die genaue Funktionsweise dieser Rebalancing Zelle ist wie folgt und wird in Abbildung 2 schematisch beschrieben: Im Mittelpunkt steht auch hier wieder (Rebalancing) Zelle (304), die wie oben bereits beschrieben aus zwei Halbzellen mit einer negativen Elektrode (305) und positiven Elektrode (306), die durch einen Separator (307) abgetrennt sind, besteht. Gespeist werden die Zellen durch den negativen Elektrolyttank - dessen Elektrolyt auch als Reduktionslösung bezeichnet wird - (300) und den positiven Elektrolyttank (302), der gleichzeitig auch der positive Elektrolyttank der Fe/Fe Zelle ist, wobei die Pumpen (301, 302) zum Umwälzen der Elektrolytflüssigkeit eingesetzt werden. Außerdem besitzt der negative Elektrolytteil einen zusätzlichen Ausgleichstank (309), in dem benutztes und nicht mehr gebrauchte Reduktionslösung über das Ventil (308) ausgelagert und bei Bedarf von außen ausgeleert werden, ohne den Kreislauf und die Operation des Gesamtsystems zu stören.

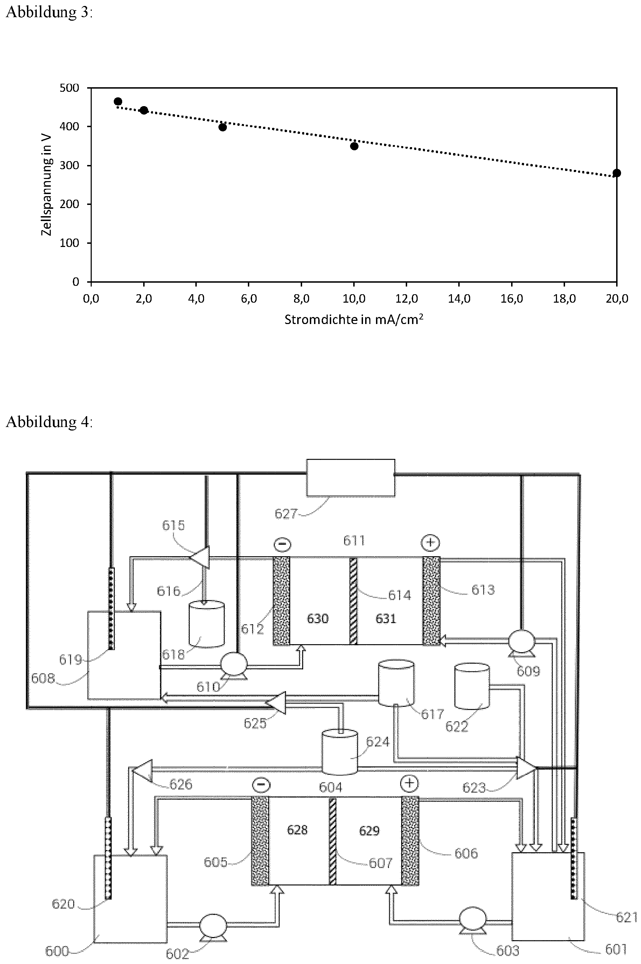

Abbildung 3 zeigt dazu beispielhaft die Abhängigkeit der Spannung der Rebalancing Zelle im Vergleich zur Stromdichte in der Zelle bei einem Elektrolyten mit SoC von 50%. Um die Zelle mit der höchsten Leistung zu betreiben (und damit die aktive Fläche und auch die Kosten so gering wie möglich zu halten) ist es möglich, die Kontakte der jeweiligen Elektroden (305 und 306) nur mit einem sehr geringen Widerstand direkt zu verbinden (oder sogar kurzschließen), da sich in diesem Fall automatisch die höchste Stromdichte bei einer Differentialspannung nahe 0 V einstellt.

Abbildung 4 zeigt ein mögliches Gesamtsystem mit primärer Fe/Fe Redox Flow Batterie und angeschlossenem Rebalancing System. Dabei beschrieben wird die primäre Fe/Fe Redox Flow Zelle (604) wieder durch die zwei Halbzellen mit der negativen (605) und der positiven Elektrode (606), abgetrennt durch einen Ionenleitenden Separator (607). Die beiden Halbzellen werden vom positiven (601) und negativen Tank (600) durch die Elektrolytumwälzpumpen (602 und 603) gespeist. Außerdem befindet sich in diesem System die Rebalancing Zelle (611), mit der negativen (612) und positiven Halbzellelektrode (613), abgetrennt durch eine ionenleitende Membran (614). Diese Membran muss nicht dieselbe Beschaffenheit besitzen, wie der Separator aus der primären Fe/Fe Zelle (607). Vorteilhaft im Sinne der Effizienz und der gegenseitigen Verunreinigung der beiden Halbzellen ist hier der Einsatz einer anionenleitenden Membran (614). Die positive Halbzelle der Rebalancing Zelle wird dabei ebenso vom positiven Elektrolyten der Primärzelle gespeist und entsprechend kann bei Bedarf Elektrolyt vom Tank (601) durch die Pumpe (609) in die Rebalancing Zelle gepumpt werden. Der negative Elektrolyt (Reduktionslösung) wird vom Reduktionslösungstank (608) durch die Zelle mit der Pumpe (610) gepumpt, wobei der verbrauchte Elektrolyt durch das Ventil (615) vom Tank (618) aufgefrischt werden kann. Zusätzlich befindet sich in dem Gesamtsystem ein Vorratsbehälter (624) für eine starke Säurelösung auf Chlorid-Basis, vorzugsweise konzentrierte wässrige HCl Lösung, das die primären Elektrolyttanks (600 und 601) bei Bedarf über die entsprechenden Ventile (626 und 623) mit der Säurelösung versorgt und damit den pH-Wert senkt. Des Weiteren kann auch der Reduktionslösungstank (608) mit der Säurelösung bei Bedarf über das Ventil (625) versorgt werden, um auch hier den pH-Wert zu kontrollieren. Ähnlich verhält es sich mit einer basischen Lösung und dem Vorratstank (617), der bei Bedarf den pH-Wert des Reduktionsmittels oder des positiven Elektrolyten erhöhen kann. Als letztes befindet sich ein weiterer Vorratstank mit Eisenpulver (622) im System, das bei Bedarf etwaige Verluste der Eisenkonzentration im positiven Elektrolyten (durch unerwünschtes Crossover von Eisen Molekülen in der Rebalancing Zelle 611, speziell durch die Membran 614) wieder kompensieren kann. Hier reagieren die Eisenpartikel (in Form von Pulver) mit den vorhandenen *Fe*³⁺ Spezies im positiven Elektrolyten in folgender Reaktion:

*Fe*⁰ + 2 *Fe*³⁺ → 3 *Fe*²⁺

Kontrolliert wird das System durch die zentrale Kontrolleinheit (627), die kontinuierlich oder an diskreten Zeitpunkten die pH-Werte und Leitfähigkeit (und damit die durchschnittliche Oxidationsstufe des jeweiligen Elektrolyten) durch die Sensoren 620 und 621 misst. Weiter werden dieselben Datenwerte für die Reduzierlösung im Tank (608) durch einen Sensor (619) erfasst. Die Kontrolleinheit kann dabei alle Ventile und Pumpen ansteuern.

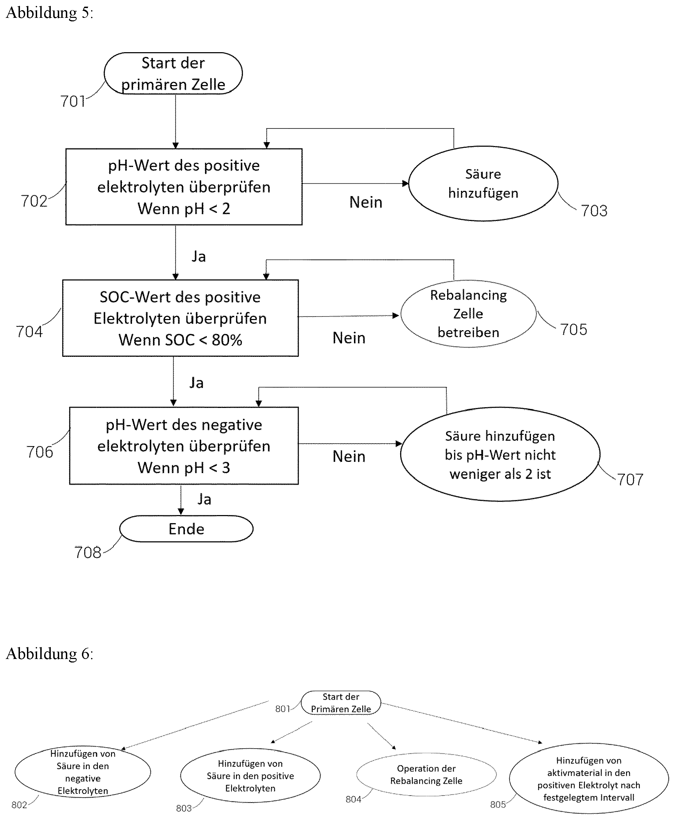

Intern ist die Steuerung des pH-Wertes der beiden Elektrolyten und der Zelle durch die Kontrolleinheit beispielhaft im Verlaufsdiagram in Abbildung 5 dargestellt. Während der Operation der Zelle (701) wird der pH-Wert des positiven Elektrolyten gemessen (702). Falls dieser über dem Schwellenwert von pH=2 liegt, muss in Intervallen so lange Säure im positiven Tank hinzugefügt werden (703), bis der pH-Wert wieder unter 2 liegt. Auch wird der SoC-Wert des positiven Elektrolyten überprüft. Um eine zu hohe Selbstentladung und einen Effizienzverlust aufgrund der hohen durchschnittlichen Oxidationszustandsgradienten zu vermeiden, wird nur ein Teil der zur Verfügung stehenden Kapazität genutzt. Praktische Beispiele sind hier 5-80% der möglichen Entladekapazität. Daher muss der SoC-Wert des positiven Elektrolyten in diesem Beispiel immer in einem Bereich unter 80% zyklisieren. Sollte der SoC-Wert des Elektrolyten über 80% steigen (auch im vollgeladenen Zustand, getestet mit der Elektrode im positiven Tank, 704) muss er in der Rebalancing Zelle elektrochemisch reduziert werden (705). Abschließend wird auch der pH-Wert des negativen Elektrolyten ermittelt (706). Hier gilt es eine Schwelle von pH=3.0-3.2 nicht zu überschreiten, sollte dies der Fall sein wird ebenfalls in mehreren Intervallen Säure zum Elektrolyten hinzugefügt, bis der pH-Wert sinkt, aber nicht unter einen Wert von pH=2 fällt (707).

Abbildung 6 beschreibt nochmals zusammenfassend die möglichen Optionen um den primären Elektrolyten aufzubereiten: pH-Wert Angleichung des negativen Elektrolyts (802), pH-Wert Angleichung des positiven Elektrolyts (803), Oxidationszustands- und Chloridgehaltausgleich des positiven Elektrolyten durch die Rebalancing Zelle (804) und Ausgleich der absoluten Eisenkonzentration im positiven Elektrolyten, das möglicherweise durch die Rebalancing Zelle verloren gegangen ist (805).

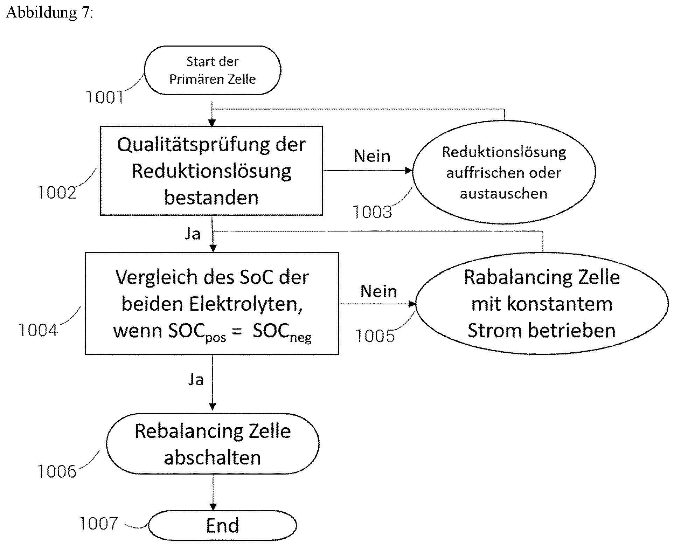

Abbildung 7 beschreibt die Operation der Rebalancing Zelle und des Systems der Reduzierlösung. Zunächst wird die Reduzierlösung einer automatisierten Qualitätskontrolle unterworfen (Messung pH-Wert, Leitfähigkeit und damit Bestimmung des Oxidationszustandes und einer möglichen Kontamination von Eisenpartikeln) (1002). Sollte die Qualitätskontrolle negativ ausfallen, muss die Reduzierlösung durch externen Eingriff aufgefrischt oder ausgetauscht werden (1003). Sollte die Qualitätskontrolle bestanden sein, wird der SoC des negativen und positiven Elektrolyten der primären Zelle verglichen (1004). Falls die beiden Werte ungleich sind (einzige Möglichkeit hier ist SoCₚₒₛ > SoC_{neg}), wird die Rebalancing-Zelle aktiviert und damit der SoCₚₒₛ-Wert gesenkt (1005), bis das Gleichgewicht wiederhergestellt wird und die Rebalancing Zelle deaktiviert wird (1006).

Grundsätzlich hängt die Dauer und Einsatzhäufigkeit der Rebalancing Zelle auch von deren Größe (aktive Zellfläche) ab. Ist die HER beispielsweise 2% der Gesamtreaktion in der Primärzelle und die Rebalancing Zelle 1% der aktiven Fläche der primären Zelle bei gleicher Stromdichte und angenommen konstanter Lade- und Entladezyklen (konstanter Strom CC) ist die Rebalancing Zelle zu 100% in Betrieb, um die Nebeneffekte der HER zu kompensieren. Ist die Rebalancing Zelle jedoch so bemessen, dass sie beispielsweise 2% der aktiven Fläche der primären Zelle entspricht und man entsprechend höhere Stromdichten in der Rebalancing-Zelle erreichen kann (zum Beispiel realistischerweise ca. 500% der Stromdichte in der primären Zelle), ist die Rebalancing-Zelle nur zu 10% der Zeit in Betrieb.

## Patentansprüche

1. Eisen-Eisen-Redox-Fluss-Batterie, umfassend
- eine erste Redox-Fluss-Zelle 604 umfassend,
- einen ersten Anodenraum 628 mit einer ersten Anode 605, einem Anolyt-Tank 600 und einer Anolyt-Pumpe 602, die so miteinander verbunden sind, dass ein Anolyt 802 zwischen dem Anolyt-Tank 600 und dem Anodenraum 628 umgewälzt werden kann,
- einen ersten Kathodenraum 629 mit einer ersten Kathode 606, einem Katholyt-Tank 601 und einer ersten Katholyt-Pumpe 603, die so miteinander verbunden sind, dass ein Katholyt 803 zwischen dem Katholyt-Tank 601 und dem ersten Kathodenraum 629 umgewälzt werden kann, und
- einen ersten Separator 607, zwischen dem ersten Anodenraum 628 und dem ersten Kathodenraum 629,
**dadurch gekennzeichnet,**
**dass** die Eisen-Eisen-Redox-Fluss-Batterie eine zweite Redox-Fluss-Zelle 611 aufweist, umfassend
- einen zweiten Anodenraum 630 mit einer zweiten Anode 612, einem Reduktionslösungstank 608 und einer Reduktionslösungs-Pumpe 610, die so miteinander verbunden sind, dass eine Reduktionslösung zwischen dem Reduktionslösungstank 608 und dem zweiten Anodenraum 630 umgewälzt werden kann,
- einen zweiten Kathodenraum 631 mit einer zweiten Kathode 613 und einer zweiten Katholyt-Pumpe 609, die so miteinander verbunden sind, dass der Katholyt 803 zwischen dem zweiten Kathodenraum 631 und dem Katholyt-Tank 601 umgewälzt werden kann,
- einen zweiten Separator 614 zwischen dem zweiten Anodenraum 630 und dem zweiten Kathodenraum 631.

2. Eisen-Eisen-Redox-Fluss-Batterie gemäß Anspruch 1, **dadurch gekennzeichnet, dass** sie einen Vorratsbehälter 624 aufweist, aus dem eine Chlorid-Ionen haltige Säure in den Anolyt-Tank 600, den Reduktionslösungstank 608 und den Katholyt-Tank 601 eingebracht werden kann.

3. Eisen-Eisen-Redox-Fluss-Batterie gemäß einem der Ansprüche 1 oder 2, **dadurch gekennzeichnet, dass** sie einen Vorratsbehälter 617 aufweist, aus dem eine basische Lösung in den Katholyt-Tank 601 und den Reduktionslösungstank 608 eingebracht werden kann.

4. Eisen-Eisen-Redox-Fluss-Batterie gemäß einem der Ansprüche 1 bis 3, **dadurch gekennzeichnet, dass** sie einen Vorratsbehälter 622 aufweist, aus dem Eisen in Form von Eisenpulver oder einer Eisen(II)- oder Eisen(III)-Ionen haltigen Verbindung in den Katholyt-Tank 601 eingebracht werden kann.

5. Eisen-Eisen-Redox-Fluss-Batterie gemäß den Ansprüchen 2 bis 4, **dadurch gekennzeichnet, dass**
- sie ein Ventil 626 aufweist, durch das die Chlorid-Ionen haltige Säure in den Anolyt-Tank 600 dosiert werden kann,
- dass sie ein oder mehrere Ventile 623 aufweist, durch das die Chlorid-Ionen haltige Säure und die basische Lösung in den Katholyt-Tank 601 dosiert werden können,
- dass sie eine Dosiervorrichtung aufweist, durch die das Eisen in Form von Eisenpulver oder einer Eisen(II)- oder Eisen(III)-Ionen haltigen Verbindung aus dem Vorratsbehälter 622 in den Katholyt-Tank 601 dosiert werden kann und
**dadurch gekennzeichnet,**
- **dass** sie ein oder mehrere Ventile 625 aufweist, durch die die Chlorid-Ionen haltige Säure und die basische Lösung in den Reduktionslösungstank 608 dosiert werden kann.

6. Eisen-Eisen-Redox-Fluss-Batterie gemäß einem der vorangehenden Ansprüche, **dadurch gekennzeichnet**, sie eine zentrale Kontrolleinheit 627 und Sensoren 619, 620, 621 aufweist, wobei die Sensoren 619, 620, 621 die pH-Werte und Leitfähigkeiten der Flüssigkeiten in Anolyt-Tank 600, Reduktionslösungstank 608 und Katholyt-Tank 601 messen und die gemessenen Werte an die zentrale Kontrolleinheit 627 weiterleiten und worin die zentrale Kontrolleinheit 627 die Pumpen und Ventile steuert.

7. Eisen-Eisen-Redox-Fluss-Batterie gemäß einem der vorangehenden Ansprüche, **dadurch gekennzeichnet**, der erste Separator 607 für Protonen und Chlorid-Ionen durchlässig ist und der zweite Separator 614 für Chlorid-Ionen durchlässig ist.

8. Verfahren zum Regenerieren des Katholyten 803 einer ersten Redox-Fluss-Zelle 604 einer Eisen-Eisen-Redox-Fluss-Batterie, umfassend die folgenden Schritte:
- Einbringen des Katholyten 803 in einen zweiten Kathodenraum 631 einer zweiten Redox-Fluss-Zelle 611 und
- Reduzieren des Katholyten 803 mittels einer in den Anodenraum 630 der zweiten Redox-Fluss-Zelle 611 eingebrachten Reduktionslösung.

9. Verfahren gemäß Anspruch 8, **dadurch gekennzeichnet, dass** die durchschnittliche Oxidationsstufe des Katholyten 803 im Katholyt-Tank 601 bestimmt und der Katholyt 803 in der zweiten Redox-Fluss-Zelle 611 reduziert wird, wenn die durchschnittliche Oxidationsstufe einen Schwellenwert überschreitet.

10. Verfahren gemäß einem der Ansprüche 8 oder 9, **dadurch gekennzeichnet, dass** der pH-Wert im Anolyt 802 durch Zugabe von Chlorid-Ionen haltiger Säure bei oder unter einem Wert von 2 gehalten wird.

11. Verfahren gemäß einem der Ansprüche 8 bis 10, **dadurch gekennzeichnet, dass** der pH-Wert im Katholyt 803 durch Zugabe von Chlorid-Ionen haltiger Säure und/oder von basischer Lösung in einem Bereich von 2 bis 3 gehalten wird.

12. Verfahren gemäß einem der Ansprüche 8 bis 11, **dadurch gekennzeichnet, dass** der Eisengehalt im Katholyt 803 durch Zugabe von Eisenpulver in den Katholyt-Tank 601 geregelt wird.

13. Eisen-Eisen-Redox-Fluss-Batterie oder Verfahren nach einem der vorangehenden Ansprüche, **dadurch gekennzeichnet, dass** die Reduktionslösung ein Reduktionsmittel enthält.

14. Eisen-Eisen-Redox-Fluss-Batterie oder Verfahren nach einem der vorangehenden Ansprüche, **dadurch gekennzeichnet, dass** die Reduktionslösung ein Reduktionsmittel ausgewählt aus der Gruppe bestehend aus Glucose, Ascorbinsäure, Ameisensäure, Weinsäure, Oxalsäure, Fruktose, Galaktose, Hydrochinon und Mercaptoessigsäure enthält.

15. Eisen-Eisen-Redox-Fluss-Batterie oder Verfahren nach einem der Ansprüche 2 bis 14, **dadurch gekennzeichnet, dass** es sich bei der Chlorid-Ionen haltigen Säure um Salzsäure handelt.
